## Europäisches Patentamt

## European Patent Office

## Office européen des brevets

(19)

(11) **EP 1 271 295 A2**

(12) ## EUROPEAN PATENT APPLICATION

(43) Date of publication:
**02.01.2003 Bulletin 2003/01**

(51) Int Cl.⁷: **G06F 3/033**

(21) Application number: **02396108.9**

(22) Date of filing: **01.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **29.06.2001 FI 20011421**

(71) Applicant: **Nokia Corporation
02150 Espoo (FI)**

(72) Inventor: **Pihlaja, Pekka
00530 Helsinki (FI)**

(74) Representative:
**Pitkänen, Hannu Alpo Antero et al
Patent Agency Pitkänen Oy,
P.O. Box 1188
70211 Kuopio (FI)**

(54) **Method and device for implementing a function**

(57) A method and apparatus for forming a sub-character on a touch-sensitive display, which comprises a touch-sensitive keyboard. In the method, a touching means is set to touch the surface of a key of said keyboard to form the main character of said key on a display device. Further, in the method, the touching location is moved along the surface of the keyboard to a distance from the initial location of the location of touch; an angle is calculated between said initial location and the termination location, which is located at the distance, relative to the formed straight and the coordination system, in which coordination system said initial location and termination location are located; the sub-character corresponding to the formed angle is selected; the selected sub-character is formed on the display apparatus. The sub-characters are indicated on the keys and show the sweeping direction.

Fig. 1

EP 1 271 295 A2

## Description

The present invention relates to implementing a function. In particular, but not necessarily, the invention relates to implementing a function with a touch-sensitive key.

Most of the present PDA devices use a touch-sensitive display and handwriting recognition as an input method. However, this involves disadvantages and many users would prefer to use a conventional QWERTY keyboard. Component manufacturers have not, however, paid much attention to optimal keyboard solutions for these devices, but, for instance, Palm V has three separate keyboards functioning with a touch-sensitive keyboard, only one of which is in its entirety shown on the display of the device.

US patent 5,612,719 discloses a solution for decreasing the space requirement for keyboards shown on a display. Said publication describes a method which utilizes movement recognition to increase functions contained in the function keys. The publication describes a touch-sensitive function key for a graphic user interface, which function key is capable of recognizing more than one screen gesture comprising a tap of the key surface or a more complex screen gesture, such as a check mark of a v-shape, or a screen gesture of an x-shape.

In conventional mechanic keyboards, more than one screen gesture can be provided with one key by means of a combination of said key and another key, such as a combination of SHIFT and Alt Gr keys. Changing the function of such keyboards is difficult, because a touch-sensitive display is typically small in size, and tapping of keys is performed with a writing means that is usually an object formed in the shape of a small pen. Thus, two writing means are required for simultaneous tapping of two keys. If function keys, such as the SHIFT key, are implemented in such a way that they can be locked into use with a first keystroke and taken out of use with a second keystroke, this slows down the writing speed considerably, and is thus not a user-friendly method.

In Windows handheld computers, such as in Compaq iPAC, a capital letter, a space and a backspace are provided by sweeping upwards from the letter key, either to the left or to the right, but these options are not visually displayed in the user interface and most of the users do not notice them. The user has to learn the sweeping directions by heart, and due to this, the use of sweeps is restricted to the same four functions in each key.

Now, a method and a system for forming a sub-function for a keyboard is provided, in particular, but not necessarily, for forming a screen gesture to be formed in a display device by means of a touch-sensitive keyboard. In this invention, movement recognition is used in the keyboard solution for determining the direction, which direction determines in the keyboard the selection of the sub-function shown by the keyboard. By tapping the key with a pen (or finger) once, a basic character (A, e) or a basic function, such as a space, is provided. Tapping or sweeping the pen in a given direction provides, in turn, a special character, for example an accented character (Ä, é, å) or another basic character (£, @, %) or a variation of a basic function, for example, as regards a space, five spaces or a tabulator.

Learning and using the method is user-friendly, because the user does not have to learn anything by heart. The special characters are shown on the keyboard, and the location of the keyboard relative to the midpoint indicates in which direction the sweep on the touch-sensitive key is to be performed and in which direction the control device is to be moved.

The user can sweep in a reliable manner at least to the "cardinal points" (upwards, downwards, to the right, to the left) and to the "half-cardinal" points (upwards to the right, downwards to the right, downwards to the left, upwards to the left), so that one main function and at least eight sub-functions can be included in one key. When, in addition, there may be different sub-functions in different keys, there will be a large number of sub-functions. If the same key includes several sub-functions (e.g. more than two sub-functions), it would be difficult to memorize the sub-functions and their sweeping directions if the sub-function characters were not shown on the keys and if the sweeping directions did not correspond to the location of the character relative to the midpoint of the character.

In practice, the restricting factor is to fit the characters to be shown into a key. In the international alphabet, the maximum number of accents per letter is seven (for letter A). However, accents are such small characters that even eight accents are easily fitted into one key.

An advantage of the invention is that only one keyboard is required and all necessary characters (Latin, numeric, accented) can be positioned in this single keyboard. In the method according to the invention, the whole keyboard is implemented in the above-described manner, and the movement is always the same, only the direction of the movement changing.

In one embodiment of the invention, the keyboard only includes one or two sub-functions, corresponding to the sub-function found in each keyboard behind the Shift and Alt Gr functions of an ordinary keyboard. Thus, the first sub-function, such as a Shift sub-function, could in each key be activated with a sweep in a given direction, for instance from the right to the left, and another sub-function, such as an Alt Gr sub-function, could in each key be activated with a sweep in another direction, for instance from above downwards. However, like in an ordinary key, the first and second sub-functions of each key are shown on the key.

When a control device is used for forming sub-functions, for example in connection with a mechanic keyboard according to the prior art, the accents used most often can also be indicated around said control device in such a way that their location relative to the midpoint of said control device is the same as their location from the midpoint of the key in the corresponding key.

According to a first aspect of the invention, a method is provided for performing a sub-function on a touch-sensitive surface, the method comprising the steps of showing at least one key on a touch-sensitive surface; showing on said key at least one character indicating a main function at a given first location of said key; showing on said key at least one character indicating a sub-function at a given second location of said key; and detecting the touch of said key on the touch-sensitive surface, characterized by the method further comprising the steps of detecting the movement of the touch along the touch-sensitive surface to a distance from the initial location of the location of touch in a given direction; and implementing said sub-function as a response to the detection of said movement of touch.

According to a second aspect of the invention, a method is provided for performing a sub-function with a keyboard; the keyboard comprising at least one key and a control device for determining the sub-function to be implemented with said key; the method comprising the steps of showing on said key at least one character indicating a main function at a given first location of said key; showing on said key at least one character indicating a sub-function at a given second location of said key; and detecting the tapping of said key, characterized by the method further comprising the steps of detecting a given direction formed with said control device; and implementing said sub-function as a response to detecting said formation of direction.

According to a third aspect of the invention, an electronic device is provided for forming a sub-function, comprising a touch-sensitive surface for showing the keyboard in a visual form, which keyboard further comprises at least one key, and which key shows at least one character indicating a main function and at least one character indicating a sub-function; the device comprising detecting means for detecting the touch on said surface and generating means for forming a main function as a response to touching the corresponding key, characterized in that the device further comprises detecting means for detecting the movement of the touch on the touch-sensitive surface to a distance from the initial location of the location of touch in a given direction; and implementation means for implementing said sub-function as a response to the detection of said movement of touch.

According to a fourth aspect of the invention, an electronic device is provided for performing a sub-function, the device comprising a keyboard further comprising at least one key, which key shows at least one character indicating a main function at a given first location of said key; and at least one character indicating at least one sub-function at a given second location of said key; the apparatus comprising means for detecting the tapping of said key, characterized in that the apparatus further comprises a control device for determining the sub-function to be implemented by said key; detection means for detecting the given direction formed with said control device; and implementation means for implementing said sub-function as a response to the detection of said formation of direction.

According to a fifth aspect of the invention, a computer program product is provided for forming a sub-function in an electronic device, the device comprising a touch-sensitive surface, on which surface a keyboard can be shown in a visual form, the keyboard further comprising at least one key, which key comprises at least one character indicating a main function and at least one character indicating a sub-function, the computer program product comprising computer program means for causing the electronic device to detect a touch on said touch-sensitive surface; computer program means for causing said electronic device to form a main function as a response to the touching of the key corresponding to said main function, characterized in that the device further comprises computer program means for detecting the movement of the touch on the touch-sensitive surface to a distance from the initial location of the location of touch in a given direction; and computer program means for causing said electronic device to implement said sub-function as a response to the detection of the movement of said touch.

According to a sixth aspect of the invention, a computer program product is provided for forming a sub-function in an electronic device, the device comprising a keyboard, which keyboard further comprises at least one key, which key shows at least one character indicating a main function at a given first location of said key and at least one character indicating a sub-function at a given second location of said key, and a control device for determining the sub-function to be implemented with said key, the computer program product comprising computer program means for causing said electronic device to detect the tapping of said key, characterized in that the device further comprises computer program means for causing the electronic device to determine the sub-function formed with the control device and to be implemented with said key; computer program means for causing said electronic device to detect the direction formed with said control device; and computer program means for causing said electronic device to implement said sub-function as a response to the detection of said formation of direction.

The invention will now be described in more detail, with reference to the attached drawings, in which

Figure 1a shows a flow chart of a method according to an embodiment of the invention;
Figure 1b shows a touch-sensitive keyboard;
Figure 1c shows an example of an implementation of the method according to Figure 1a;
Figure 1d shows an embodiment for determining a direction in the method according to the invention.
Figure 1e shows a flow chart of a method according
to an alternative embodiment of the invention;
Figure 2a shows a flow chart of a method according
to an alternative embodiment of the invention;
Figure 2b shows an illustrative example of an implementation of the method according to Figure 2a;
Figure 3 shows a communication device according
to an embodiment of the invention;
Figure 4 shows a communication device according
to an alternative embodiment of the invention.

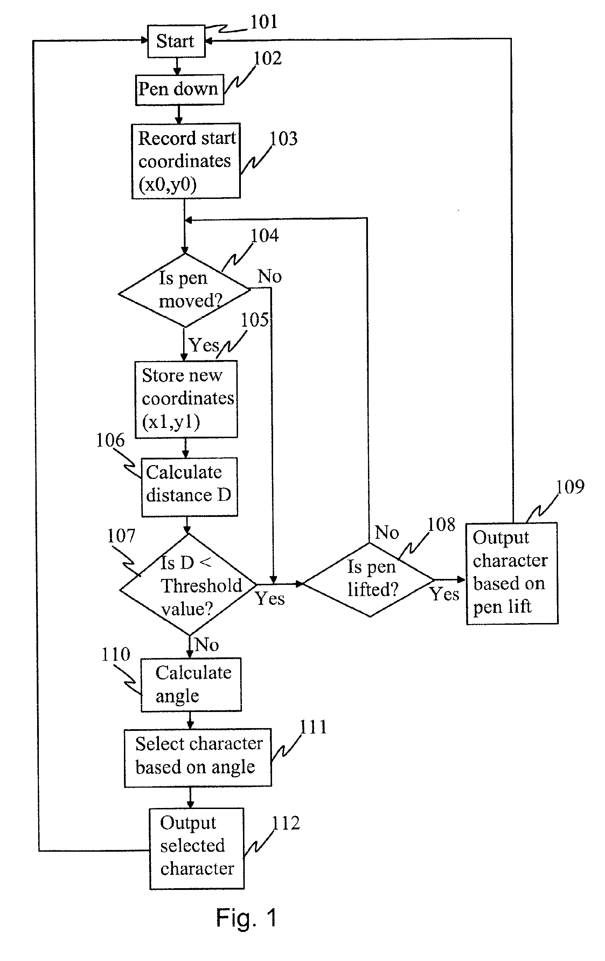

Figure 1a shows a flow chart of a method according to an embodiment of the invention. The method is illustrated by forming an accented character to be shown in a display device. The method according to the invention is not restricted to be used only in forming accented characters, but also functions indicated on a key, such as a space, can be performed in a corresponding way, as shown by the following steps. In step 101, start and initialization of the equipment are carried out. In step 102, it is studied whether the surface of a key of a touch-sensitive keyboard is tapped (e.g. with a finger or an appropriate pen or stylus). In step 103, start coordinates (x0, y0) are recorded where the tapping of the surface is started. In step 104, it is studied whether the tapping location has moved. If the tapping location has not moved, the following step is 108, where it is studied whether the pen has been lifted up from the surface. If, in step 108, the pen has been lifted up from the surface, the following step is 109, where a non-accented character is output. If, in step 108, the pen has not been lifted up from the service, one returns to step 104 and moves on to step 105 until the pen is moved on the surface of the key, whereby coordinates (x1, y1) are recorded. In step 106, a distance D between the coordinates (x0, y0) and (x1, y1) is calculated, for instance in accordance with the formula $D = \sqrt{(x_1 - x_0)^2 + (y_1 - y_0)^2}$. In step 107, it is studied whether D is greater than a predetermined threshold value. If it is not, the following step is 108, where it is studied whether the pen has been lifted up from the surface. If, in step 108, it is observed that the pen has been lifted, the following step is 109, where a non-accented character is output. If, in step 108, the pen still remains on the surface of the key, one moves on through step 104 further to step 107, until D is greater than or equal to a predetermined threshold value, whereby the following step is 110, where a direction is formed by calculating an angle θ between the start coordinates (x0, y0) and termination coordinates (x1, y1). Preferably, said direction is substantially the same as the direction of the location of said character, which is shown on a key and indicates a sub-function, from the midpoint of said key. The start coordinates (x0, y0) are preferably set to correspond to the origin of the xy coordinate system formed in the midpoint of the key, the termination coordinates (x1, y1) being set to correspond to the location (x1, y1) of said xy coordinate system. The

formula $\theta = \tan \frac{y_1}{x_1}$ gives the formed angle. In step 111, the character to be output is selected on the basis of said angle θ, which character can be, for example, a combination of the main character and an accented character of said key, such as the character 'é' or 'ü', or another main character of the key, such as the character '%' or '@'. In step 112, said character is output. The method of the invention can be used to add accents also to other than Latin characters and it can also be used to add tone marks, rather than accents, to the base characters. The base character can also be e.g. a Japanese or Chinese character. Also, the accent mark does not have to be one that affects the sound (phoneme) of the character. It can affect the intonation, as do the tone marks of Pinyin Chinese. Pinyin Chinese is Chinese spelled with Latin characters. These Latin characters can be complemented with four kinds of tone marks that tell how a syllable is to be intonated. The invention can also be used for adding so called diacritic marks to Japanese basic Kana characters. The two types of diacritic marks, Nigori and Maru, alter the sound of the basic Kana character the same way as accents alter the sound of Latin characters.

The steps of the above-described method are preferably implemented as a computer program code.

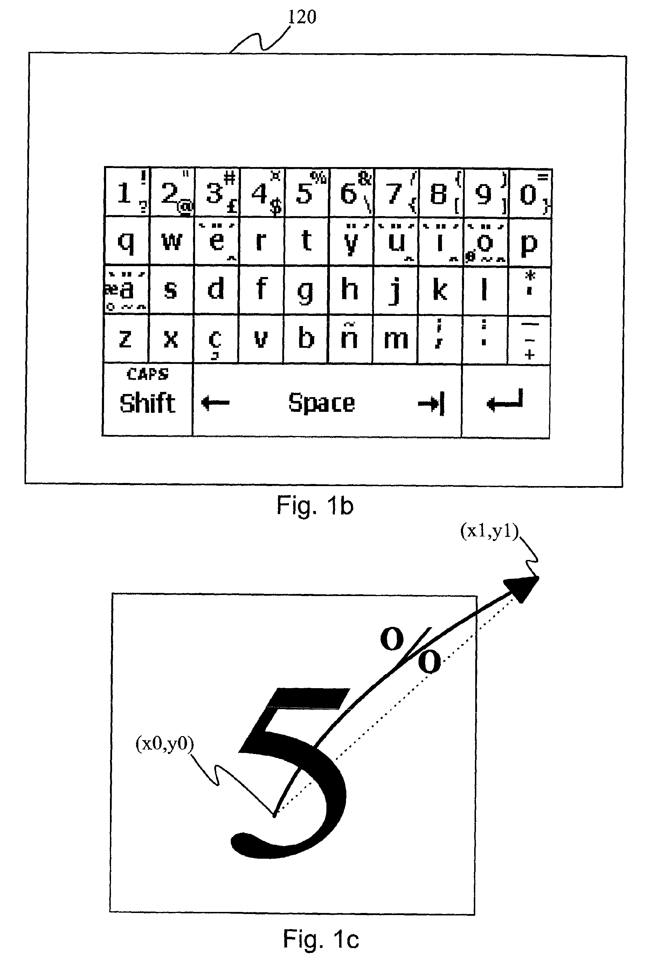

Figures 1b and 1c illustrate the method presented in Figure 1a. Figure 1b shows a touch-sensitive display 120, which can be formed, for instance, of a planar liquid crystal display, which is touch-sensitive. A keyboard is shown on the surface of said display 120, whereby touching a given part of said display, for instance in the area of the key '5' of the presented keyboard, results in the output of the character '5' on the display.

Figure 1c shows in more detail the key '5', which usually also comprises another character, i.e. the character '%', which is formed, with a prior art keyboard, by the key combination (SHIFT)+'5'. When the key is touched for instance with a finger, pen, or other corresponding touching means preferably, but not necessarily, in the middle part of said key, an initial location, i.e. coordinates (x0, y0), can be formed. When the touching means are moved on the surface of the touch-sensitive display towards the character '%', coordinates (x1, y1) are formed, for example when the distance D between said coordinates becomes longer than the predetermined threshold value. The character '%' can be output on the display either when the threshold value has been exceeded, even if the touching means is still on the surface of the touch-sensitive display. Alternatively, the character '%' can be output only after the touching means has been lifted up from the surface of said display.

Figure 1d shows an embodiment for determining a direction in a method according to the invention. All keys of the keyboard can be shown relative to the xy coordinate system in such a way that the origin 151 (x=0, y=0) of said coordinate system is positioned in the middle part of said key in the manner shown in Figure 1d. The key can be divided relative to the origin into one or more sectors 152 to 167, whereby one or more sectors correspond to one character, and thus, a certain character corresponds to the values of the angle relative to the origin. For example, the '%' character in sectors 152, 153 comprises the values of the angle $\theta$ between $\alpha_1 < \theta < \alpha_2$. The method according to the invention is not restricted to the embodiments described above, but other kinds of embodiments can also be used in which the formed angle is compared with the angle value corresponding to the sub-character.

Figure 1e shows a flow chart of a method according to an alternative embodiment of the invention. The method is illustrated by forming an accented character to be shown on a display apparatus. The area comprising a key is divided into sixteen sectors (reference numerals 152 to 167) relative to the midpoint of said key, whereby two adjacent sixteenth-sectors correspond to one sub-character. In the case of the example, the sixteenth-sectors 152 and 153 correspond to the character '%'. The method according to the invention is not restricted to the formation of accented characters only, but also a function indicated on a key, such as a space, can be carried out in a corresponding manner, as shown in the following steps. In step 131, the equipment is started and initialized. In step 132, it is studied whether the surface of a key of a touch-sensitive keyboard is tapped (e.g. with a finger or an appropriate pen or stylus). In step 133, start coordinates (x0, y0) are recorded where the tapping of the surface is started. In step 134, it is studied whether the tapping location has moved. If the tapping location has not moved, the following step is 138, where it is studied whether the pen has been lifted up from the surface. If, in step 138, the pen has been lifted up from the surface, the following step is 139, where a non-accented character is output. If, in step 138, the pen has not been lifted up from the surface, one returns to step 134 and moves on to step 135 until the pen is moved on the surface of the key in some direction, which direction is preferably substantially the same as the direction of the location of said character, which is shown on the key and indicates the sub-function, from the midpoint of the key, whereby the coordinates (x1, y1) are recorded and the sector is selected. The selection of the sector is described with the illustration of the following example. At first, it is studied whether the values of x and y coordinates increase or decrease. If, for example, both x and y coordinates increase, the direction is towards the area comprising sectors 152 to 154 and 167. After that, it is studied whether the y coordinate increases more rapidly than the x coordinate (or more slowly than the x coordinate). If, for example, the y coordinate increases more rapidly than the x coordinate, the direction is towards the area comprising sectors 153 and 154. If, by contrast, the y coordinate increases more slowly than the x coordinate, the direction is towards the area comprising sectors 152 and 167. Next, it is studied whether y increases more rapidly than 2*x (or more slowly than 2*x). If the y coordinate increases more rapidly than the 2*x coordinate, the direction is towards the area comprising sector 154. If the y coordinate increases more slowly than the 2*x coordinate, the direction is towards the area comprising sector 153. In step 136, a distance D between the coordinates (x0, y0) and (x1, y1) is calculated, for instance in accordance with the Formula $D = \sqrt{(x_1 - x_0)^2 + (y_1 - y_0)^2}$. In step 137, it is studied whether D is greater than a predetermined threshold value. If it is not, the following step is 138, where it is studied whether the pen has been lifted up from the surface of the key. If, in step 138, it is observed that the pen has been lifted, one moves on to step 139, where a non-accented character is output. If, in step 138, the pen still remains on the surface of the key, one moves on through step 134 to step 137 until D is greater than or equal to the set threshold value, in other words until the draw from the location x0, y0 to the location x1, y1 is sufficiently long. In step 140, the character to be output is selected on the basis of said sector, which character can be, for instance, a combination of the main character and an accent of said key (character + accent = accented character), such as the character 'é' or 'ü' or another main function of the key, such as the character '%' or '@'. In step 141, the character in the area of the selected sector, i.e. the character '%', is output. The steps of the above-described method are preferably implemented as a computer program code.

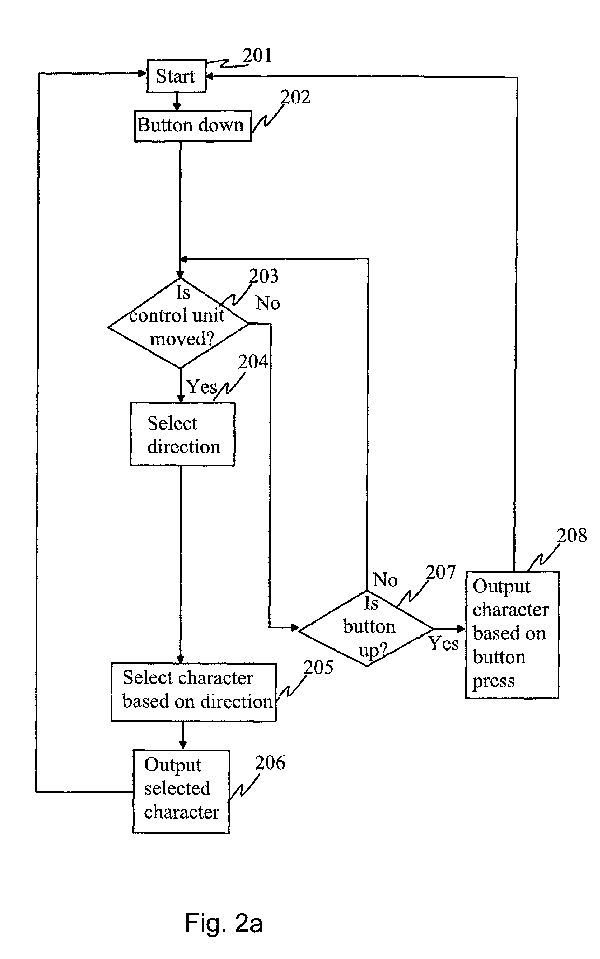

Figure 2a shows a flow chart of a method according to an alternative embodiment of the invention, in which the keyboard is a mechanic keyboard, and in addition, a controller, such as a mouse controller, a stick controller or a corresponding control device, is used to form characters. The method is illustrated by forming an accented character to be shown on a display apparatus. The method according to the invention is not restricted to be used in the formation of accented characters only, but also functions indicated on keys, such as a space, can be performed in a manner corresponding to what is described in the following steps. In step 201, start and initialization of the equipment are carried out, or the equipment is prepared for the standby state. In step 202, it is studied whether a key of the mechanic keyboard is tapped. In step 203, it is studied whether the control device, such as a mouse, has been moved to another location to form new coordinates. If the control device has not been moved, the following step is 207, where it is studied whether the key still remains tapped down. If, in step 207, the key is not tapped down any longer, the following step is 208, in which the primary character is output, which character is formed with the key in question by tapping the key. If, in step 208, the key still remains tapped down, one returns to step 203 and moves to step 204, until the control device is moved in some direction, whereupon the direction is selected in which the control device has been moved. The direction is substantially the same as the direction of the location of the character shown on the key and indicating a sub-function relative to the midpoint of the key. In step 205, the character to be output on the basis of said direction is selected, which character can be a combination of the main character and an accent of said key, or, for instance, a character that can be formed with another key. In step 206, said character is output. The steps of the above-described method are preferably implemented as a computer program code.

The method shown in Figure 2a can be alternatively implemented in such a way that when the key is tapped down, the main character is immediately output. If the key is kept tapped down and the controller is deflected, the main character is replaced with the sub-character corresponding to the direction. If the key is still tapped down, the controller can be deflected again in a different direction or in the same direction, whereby the sub-character is replaced by another sub-character. The sub-character is considered selected when both the key and the controller are released. If the key is released first, the controller must not immediately go over to the operation state, for instance to a cursor control mode, before it is released once to its middle position. To avoid visual incoherence, the most common accents can be indicated not on the key but around the controller.

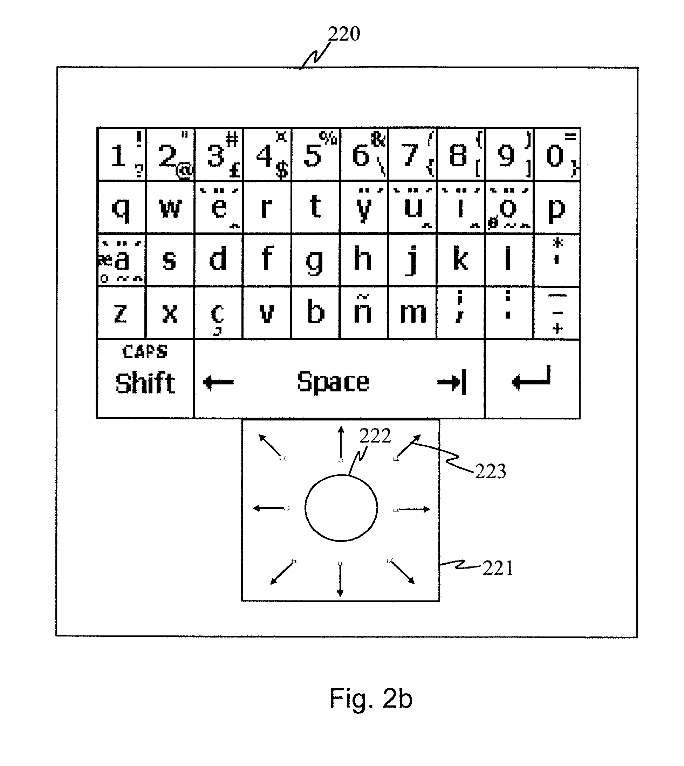

Figure 2b shows a mechanic keyboard 220 comprising a control device 221, the controller device further comprising a controller 222, and at least one direction indicator 223, which guides the user to form the direction towards the direction character in question by means of the controller 222.

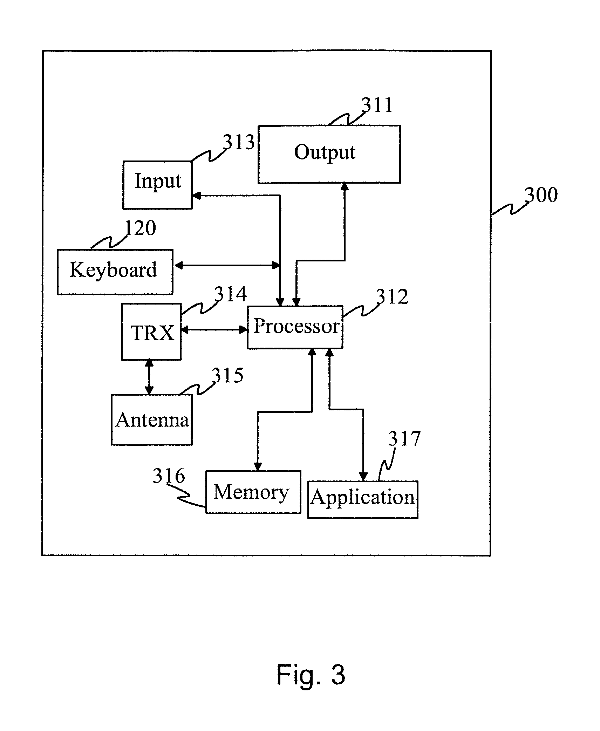

Figure 3 shows an electronic device, such as a communication device 300, according to an embodiment of the invention. The communication device comprises means 311, 313 for forming information, the means further comprising for instance a display and a loudspeaker, by means of which the user can in an audiovisual manner receive information through the communication device; and for instance a keyboard 120 or the keyboard 220 shown in Figure 2b; or a touch display for feeding information to the communication device. In addition, the communication device can comprise a processor 312 for performing the functions of the communication device, and a memory 316 for recording the received information; means 312, 314, 315 for receiving information wirelessly; further comprising one or more transceivers 314; and one or more antennas 315 for wireless radio communication for communicating with a mobile network, for example. Furthermore, the communication device 300 comprises one or more applications 317, for instance for forming characters formed with said keyboard on the display 313 of the communication device. The application 317 further comprises computer program means for causing said electronic device to detect a touch on said touch-sensitive surface; computer program means for causing said electronic device to form a main function as a response to the touching of the key corresponding to said main function, characterized in that the device further comprises computer program means for detecting the movement of the touch on a touch-sensitive surface to a distance from the initial location of the location of touch in a given direction, which direction is substantially the same as the direction of the location of said character, which indicates the sub-function shown on the key, from the midpoint of the key; and computer program means for causing said electronic device to implement said sub-function as a response to said movement of the touch.

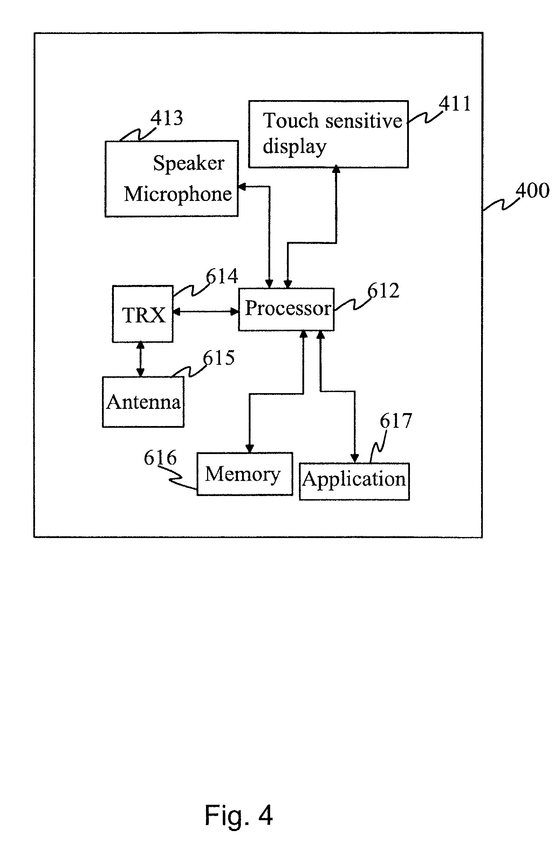

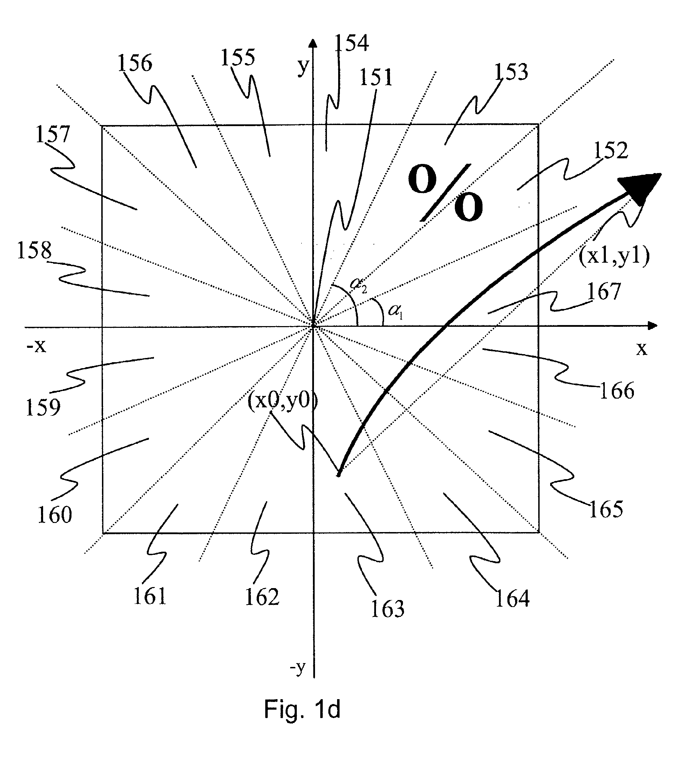

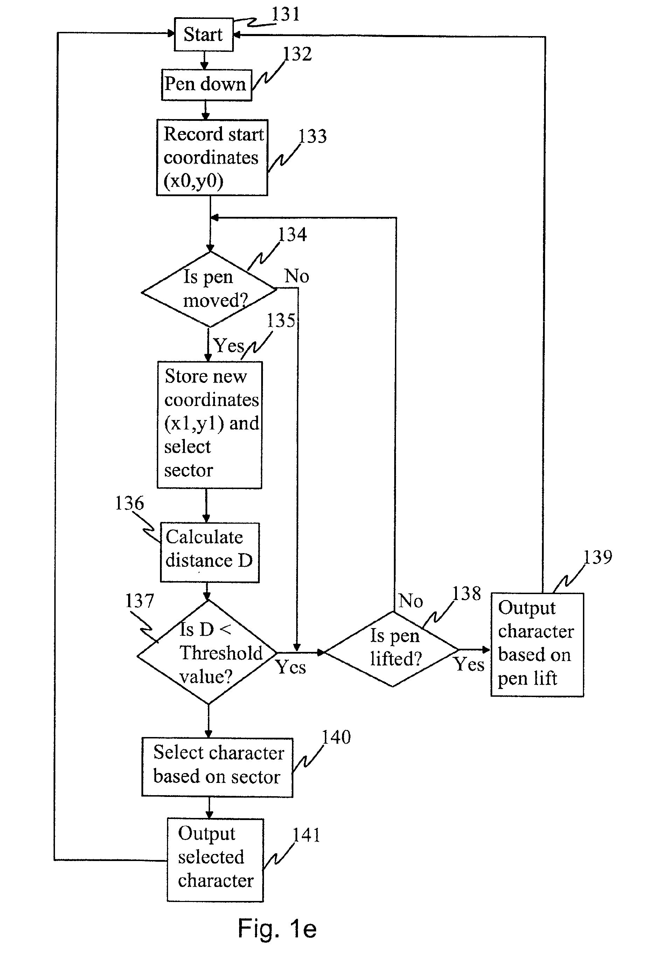

Figure 4 shows an electronic device, such as a communication device 400, according to another preferred embodiment of the invention. The communication device comprises means 413 and 220 for forming information, the means 413 comprising for instance a loudspeaker and a microphone for producing and presenting information in an audio form. The means 220 comprises for instance a touch-sensitive display, by means of which the user can visually receive information through a communication device, and for instance a touch-sensitive display further comprising a touch-sensitive keyboard for feeding information to the communication device. The communication device 400 can further comprise a processor 412 for performing functions and a memory 416 for recording received information, for example; means 412, 414, 415 for receiving information wirelessly, further comprising one or more transceivers 414; and one or more antennas 415 for wireless radio communication or for communicating with a mobile network, for example. Further, the communication device 400 comprises one or more applications 417 for forming characters formed with said touch-sensitive display 222 on the touch-sensitive display 220 of the communication device. The application 417 further comprises computer program means for causing said electronic device to detect the tapping of said key, characterized in that the device further comprises computer program means for causing said electronic device to determine the sub-function to be implemented with said key; computer program means for causing said electronic device to detect the direction formed with said control device; the direction being substantially the same as the direction of the location of said character, which indicates the sub-function shown on the key, from the midpoint of the key; and computer program means for causing said electronic device to implement said sub-function as a response to the detection of said formation of direction.

Herein, implementation and embodiments of the invention have been described by means of examples. It will be obvious to a person skilled in the art that the invention is not restricted to the details of the above-described embodiments and that the invention can be implemented in another form as well without deviating from the characteristic features of the invention. The above-described embodiments should be considered illustrating but not restricting. Options for the implementation and use of the invention are thus only limited by the attached claims. Hence, the different implementation options of the invention defined in the claims, also equivalent implementations, are included in the scope of the invention.

**Claims**

1. A method of performing a sub-function on a touch-sensitive surface, the method comprising the steps of

showing at least one key on a touch-sensitive surface;

showing on said key at least one character indicating a main function at a given first location of said key;

showing on said key at least one character indicating a sub-function at a given second location of said key; and

detecting the touch of said key on the touch-sensitive surface, **characterized by** the method further comprising the steps of

detecting the movement of the touch along the touch-sensitive surface to a distance from the initial location of the location of touch in a given direction; and

implementing said sub-function as a response to the detection of said movement of touch.

2. A method of performing a sub-function with a keyboard; the keyboard comprising at least one key and a control device for determining the sub-function to be implemented with said key; the method comprising the steps of

showing on said key at least one character indicating a main function at a given first location of said key;

showing on said key at least one character indicating a sub-function at a given second location of said key; and

detecting the tapping of said key, **characterized by** the method further comprising the steps of

detecting a given direction formed with said control device; and

implementing said sub-function as a response to detecting said formation of direction.

3. A method according to Claim 1, **characterized by** said sub-function being selected if said distance from said initial location to said termination location is longer than a predetermined threshold value.

4. A method according to Claims 1 and 2, **characterized by** said direction being substantially the same as the direction of the location of said character, which indicates the sub-function shown on the key, from the midpoint of said key.

5. A method according to Claims 3 and 4, **character-**

**ized by** said main function being formation of a primary character and said sub-function being formation of an accented character of said primary character.

6. A method according to Claims 3 and 4, **characterized by** said main function being formation of a first character and said sub-function being formation of a second character.

7. A method according to Claims 3 and 4, **characterized by** said main function being formation of a function and said sub-function being formation of an alternative to said function.

8. A method according to Claims 3 and 4, **characterized by** said main function being formation of a first function and said sub-function being formation of a second function.

9. An electronic device for forming a sub-function, comprising a touch-sensitive surface for showing the keyboard in a visual form, which keyboard further comprises at least one key, and which key shows at least one character indicating a main function and at least one character indicating a sub-function; the device comprising

detecting means for detecting the touch on said surface; and

generating means for forming a main function as a response to touching the corresponding key, **characterized in that** the device further comprises

detecting means for detecting the movement of the touch on the touch-sensitive surface to a distance from the initial location of the location of touch in a given direction; and

implementation means for implementing said sub-function as a response to the detection of said movement of touch.

10. An electronic device for performing a sub-function, the device comprising a keyboard further comprising at least one key, which key shows at least one character indicating a main function at a given first location of said key; and at least one character indicating at least one sub-function at a given second location of said key; the apparatus comprising means for detecting the tapping of said key, **characterized in that** the apparatus further comprises

a control device for determining the sub-function to be implemented by said key;

detecting means for detecting the given direction formed with said control device; and

implementation means for implementing said sub-function as a response to the detection of the formation of said direction.

11. A computer program product for forming a sub-function in an electronic device, the device comprising a touch-sensitive surface, on which surface a keyboard can be shown in a visual form, the keyboard further comprising at least one key, which key comprises at least one character indicating a main function and at least one character indicating a sub-function, the computer program product comprising

computer program means for causing the electronic device to detect a touch on said touch-sensitive surface;

computer program means for causing said electronic device to form a main function as a response to the touching of the key corresponding to said main function, **characterized in that** the device further comprises

computer program means for detecting the movement of the touch on the touch-sensitive surface to a distance from the initial location of the location of touch in a given direction; and

computer program means for causing said electronic device to implement said sub-function as a response to the detection of said movement of touch.

**12.** A computer program product for forming a sub-function in an electronic device, the device comprising a keyboard, which keyboard further comprises at least one key, which key shows at least one character indicating a main function at a given first location of said key and at least one character indicating a sub-function at a given second location of said key, and a control device for determining the sub-function to be implemented with said key, the computer program product comprising

computer program means for causing said electronic device to detect the tapping of said key, **characterized in that** the device further comprises

computer program means for causing the electronic device to determine the sub-function formed with the control device and to be implemented with said key;

computer program means for causing said electronic device to detect the direction formed with said control device; and

computer program means for causing said electronic device to implement said sub-function as a response to the detection of said formation of direction.

Start — 101

Pen down — 102

Record start coordinates (x0,y0) — 103

Is pen moved? — 104 — No

Yes — 105

Store new coordinates (x1,y1)

106 — Calculate distance D

107 — Is D < Threshold value? — Yes

No — 108 — Is pen lifted? — Yes

No

Output character based on pen lift — 109

110 — Calculate angle

Select character based on angle — 111

Output selected character — 112

Fig. 1

120

Fig. 1b

(x1,y1)

(x0,y0)

Fig. 1c

Fig. 2a

220

Fig. 2b

Fig. 3

Fig. 4

Fig. 1d

Fig. 1e